# DEMANDE DE BREVET EUROPEEN

(11) **EP 1 850 573 A1**
(43) Date de publication de la demande: **31.10.2007**
(21) Numéro de dépôt: 07106158.4
(22) Date de dépôt: 13.04.2007
(51) Int. Cl.: H04M 9/08, H04M 1/60, H04B 3/21

(54) **Procede de reduction d'echo d'un signal audio large bande**

(30) Priorité: 28.04.2006 FR 0651515
(71) Demandeur: France Telecom, 75015 Paris (FR)
(72) Inventeur: Le Tourneur, Grégoire, 22700 Saint Quay Perros (FR)

(57) **Abrégé**

Procédé de réduction d'écho par un dispositif (10) d'annulation d'écho fonctionnant à une fréquence d'échantillonnage fₑ d'un signal audio dans une bande de fréquence comprise entre 0 et fₘₐₓ, échantillonné à une fréquence k.fₑ, k étant un entier supérieur à 1.

Selon l'invention, ledit procédé comprend les étapes consistant à :
- filtrer ledit signal audio en k sous-bandes de fréquences respectives comprises entre (i-1).fₘₐₓ/k et i.fₘₐₓ/k, i variant entre 1 et k,
- décimer la fréquence d'échantillonnage k.fₑ du signal audio dans un rapport k,
- appliquer le dispositif (10) d'annulation d'écho à un signal filtré dans au moins une desdites sous-bandes.

Application aux terminaux sans fil mains libres.

## Description

La présente invention concerne un procédé de réduction d'écho par un dispositif d'annulation d'écho fonctionnant à une fréquence d'échantillonnage fₑ d'un signal audio dans une bande de fréquence comprise entre 0 et fₘₐₓ échantillonné à une fréquence k.fₑ, k étant un entier supérieur à 1.

L'invention trouve une application particulièrement avantageuse dans le domaine des terminaux sans fil mains-libres, en particulier les terminaux DECT (« Digital Enhanced Cordless Telecommunications»), WiFi ou encore Bluetooth.

Actuellement, la fonction « mains libres » est un élément de confort qui doit pouvoir être proposé par tous les nouveaux terminaux de type DECT. Cependant, compte tenu du fait de la distance relativement grande pouvant séparer le locuteur du terminal, le signal capté par le microphone provenant du haut-parleur peut être du même ordre de grandeur que celui provenant du locuteur lui-même, ce qui se traduit par un effet d'écho qui non seulement est désagréable à l'écoute mais qui en plus rend le mode mains-libres proche d'un fonctionnement en alternat (« half-duplex »), les locuteurs ne parlant qu'un après l'autre, alors que le but recherché aujourd'hui pour tous les terminaux est un fonctionnement « full-duplex ».

C'est pour permettre de réaliser ce mode de fonctionnement « full-duplex » que les terminaux mains-libres ont adopté pour la plupart une technique d'annulation d'écho acoustique basée sur le filtrage adaptatif.

En substance, cette technique consiste à calculer une estimée de l'écho à partir du signal audio reçu au haut-parleur du terminal, à comparer cette estimée avec l'écho détecté au microphone, à calculer une fonction d'erreur comme la différence entre l'écho détecté et l'estimée de l'écho, et à modifier le calcul de l'estimée de manière à minimiser la fonction d'erreur, appelée aussi résidu.

On comprend que la complexité de ces opérations exige une puissance de calcul importante.

Les terminaux sans fil de type DECT, WiFi, Bluetooth ou autre comprennent généralement un circuit dédié à la gestion de la fonction radio proprement dite, et un processeur de type RISC (« Reduced Instruction Set Computer ») pour la gestion des appels et des périphériques, tels que le clavier, l'écran,...

Cependant, ces processeurs de type RISC ne sont pas conçus pour effectuer des fonctions de traitement de signal complexes. C'est pour cela que la gamme des circuits pour terminaux sans fil se renforce avec des versions intégrant un processeur de puissance DSP (« Digital Signal Processor ») dans lequel on retrouve des fonctions avancées, telles que le codage et le décodage audio, ainsi que l'annulation d'écho acoustique permettant d'offrir une fonction mains-libres de qualité pour les terminaux haut de gamme. On remarquera toutefois que, contrairement aux processeurs RISC reprogrammables, les codes des processeurs DSP sont figés en mémoire morte et ne sont donc pas modifiables.

Les circuits DECT existants ont été conçus à l'origine pour un usage en bande téléphonique, de 300 à 3400 Hz, et codage G.726 à 32 kbit/s. Avec les processeurs DSP actuels, le signal est échantillonné à une fréquence fₑ de 8 kHz.

Afin d'augmenter la qualité d'écoute, il est souhaitable d'élargir la bande passante des terminaux au-delà de la bande téléphonique pour atteindre des fréquences beaucoup plus élevées, de l'ordre de 7000 Hz par exemple. Cependant, pour traiter numériquement les signaux dans la partie haute de la bande ainsi élargie, il est nécessaire d'augmenter la cadence d'échantillonnage pour l'amener à une fréquence de 16 kHz, soit le double de celle utilisée pour la bande téléphonique constituant la partie basse de la bande élargie. Ladite bande élargie est définie entre une fréquence de 0 Hz et une fréquence fₘₐₓ égale à 8000 Hz, la bande téléphonique étant contenue dans une sous-bande basse fréquence entre 0 et 4000 Hz.

Or, avec les circuits intégrant un processeur DSP, notamment pour le traitement de l'écho acoustique, il n'est plus possible d'utiliser en bande élargie les fonctions avancées offertes par ce processeur du fait que sa fréquence d'échantillonnage fixée par construction à 8 kHz n'est plus compatible avec l'échantillonnage à 16 kHz du signal en bande élargie.

Dans ces conditions, la fonction d'annulation d'écho se trouve donc en principe indisponible. Or, il se trouve que la valeur du couplage entre haut-parleur et microphone est élevée dans des terminaux relativement compacts du type sans fil et que le fonctionnement en bande élargie renforce les basses fréquences qui débutent vers 150 Hz au lieu de 300, ce qui augmente l'écho acoustique par rapport à un terminal fonctionnant en bande étroite. Ces considérations confortent la nécessité d'un dispositif d'annulation d'écho à base de filtrage adaptatif pour proposer une fonction mains-libres en « full-duplex » pour les terminaux fonctionnant en bande élargie, étant entendu que, sans dispositif d'annulation d'écho à base de filtrage adaptatif, le mode mains-libres est proche du mode « half-duplex », inacceptable aujourd'hui pour les terminaux large bande haut de gamme.

Le processeur DSP ne pouvant assurer la fonction d'annulation d'écho à cause d'une cadence d'échantillonnage insuffisante, on pourrait envisager d'implanter cette fonction dans le processeur RISC lui-même, lequel serait alors reprogrammé à une fréquence d'échantillonnage de 16 kHz. Cette solution n'est toutefois pas possible à cause du manque de ressources suffisantes de ce type de processeur, le traitement de l'écho exigeant une forte puissance de calcul, comme on l'a vu plus haut.

Une solution alternative consisterait à ajouter un processeur DSP fonctionnant à 16 kHz de fréquence d'échantillonnage pour réaliser la fonction mains-libres en bande élargie. L'adjonction d'un processeur de ce type conduirait cependant à réaliser un circuit imprimé plus complexe et donc plus coûteux auquel s'ajouterait le prix du composant lui-même. De plus, ce circuit présenterait une consommation électrique supérieure, préjudiciable et particulièrement critique pour un terminal sans fil.

Aussi, le problème technique à résoudre par l'objet de la présente invention est de proposer un procédé de réduction d'écho par un dispositif d'annulation d'écho fonctionnant à une fréquence d'échantillonnage fₑ d'un signal audio dans une bande de fréquence comprise entre 0 et fₘₐₓ, échantillonné à une fréquence k.fₑ, k étant un entier supérieur à 1, qui permettrait de réaliser dans les terminaux mains-libres la fonction de réduction de l'écho tout en utilisant des processeurs existants DSP fonctionnant à une fréquence d'échantillonnage fₑ inférieure à la fréquence d'échantillonnage k.fₑ du signal audio dans une bande de fréquence élargie comprise entre 0 et fₘₐₓ. En référence à l'état de la technique précédemment exposé, la fréquence fₑ d'échantillonnage du processeur DSP peut être de 8 kHz et la fréquence du signal audio de 16 kHz, le rapport entre les deux fréquences d'échantillonnage étant k=2.

La solution au problème technique posé consiste, selon la présente invention, en ce que ledit procédé comprend les étapes consistant à :
- filtrer ledit signal audio en k sous-bandes de fréquences respectives comprises entre (i-1).fₘₐₓ/k et i.fₘₐₓ/k, i variant entre 1 et k,
- décimer la fréquence d'échantillonnage k.fₑ du signal audio dans un rapport k,
- appliquer le dispositif d'annulation d'écho à un signal filtré dans au moins une desdites sous-bandes.

Ainsi, la solution proposée par l'invention consiste à utiliser le mécanisme d'annulation d'écho du processeur DSP, sans aucune modification ni l'ajout d'un autre circuit, afin de proposer une fonction mains-libres de qualité et à faible coût.

Pour ce faire, le signal issu du microphone est séparé en une pluralité de k sous-bandes complémentaires, dont le nombre k correspond au rapport entre les fréquences d'échantillonnage du signal audio en bande élargie 0-fmax et du processeur DSP. La fréquence d'échantillonnage du signal après décimation dans le rapport k se trouve ramenée à celle du dispositif d'annulation d'écho, lequel peut donc être appliqué au signal contenu dans l'une des k sous-bandes de fréquence.

Par ailleurs, il y a avantage, conformément à l'invention, à ce que ledit dispositif d'annulation est appliqué au signal filtré dans une sous-bande présentant l'écho le plus important. L'essentiel de l'écho provenant des basses fréquences, cette sous-bande sera le plus souvent la première sous-bande i=1, comprise entre 0 et fₘₐₓ/k.

Pour une bande élargie comprise entre 0 et fₘₐₓ=8000 Hz et un rapport k=2 entre les deux fréquences d'échantillonnage, la bande de fréquence est découpée en k=2 sous-bandes, à savoir une sous-bande basse entre 0 et 4000 Hz contenant la bande téléphonique et une sous-bande haute entre 4000 et 8000 Hz. Par décimation, l'échantillonnage dans ces deux sous-bandes est ramené à 8 kHz, ce qui permet par exemple d'appliquer la fonction d'annulation du processeur DSP à 8 kHz à la sous-bande basse, plus sensible au couplage entre le haut-parleur et le microphone. La sous-bande haute 4000-8000 Hz n'est alors pas traitée du point de vue de l'annulation d'écho. Néanmoins, l'invention prévoit qu'un gain variable est appliqué à au moins un signal dans une desdites sous-bandes. Cette disposition peut s'appliquer à toutes les sous-bandes et plus particulièrement aux sous-bandes non soumises à annulation d'écho comme la sous-bande 4000-8000 Hz précitée.

L'invention concerne également un système de réduction d'écho d'un signal audio dans une bande de fréquence comprise entre 0 et fₘₐₓ, échantillonné à une fréquence k.fₑ, k étant un entier supérieur à 1, ledit système comprenant un dispositif d'annulation d'écho fonctionnant à une fréquence d'échantillonnage fₑ, remarquable en ce que ledit système comprend en outre un module de découpage dudit signal audio par filtrage en k sous-bandes de fréquences respectives comprises entre (i-1).fₘₐₓ/k et i.fₘₐₓ/k, i variant entre 1 et k, et décimation de la fréquence d'échantillonnage k.fₑ dans un rapport k, une sortie dudit module de découpage étant reliée au dispositif d'annulation d'écho.

L'invention concerne encore un terminal de télécommunication, notamment de type sans fil, remarquable en ce qu'il comporte un système de réduction d'écho tel que brièvement exposé ci-dessus.

Enfin, l'invention concerne un programme d'ordinateur comprenant des instructions pour la mise en oeuvre du procédé selon l'invention lorsque ledit programme est exécuté par un ordinateur.

La description qui va suivre en regard des dessins annexés, donnés à titre d'exemples non limitatifs, fera bien comprendre en quoi consiste l'invention et comment elle peut être réalisée.

La figure 1 est un schéma d'un système de réduction d'écho conforme à l'invention.

La figure 2 est diagramme de fonctionnement du système de réduction d'écho de la figure 1.

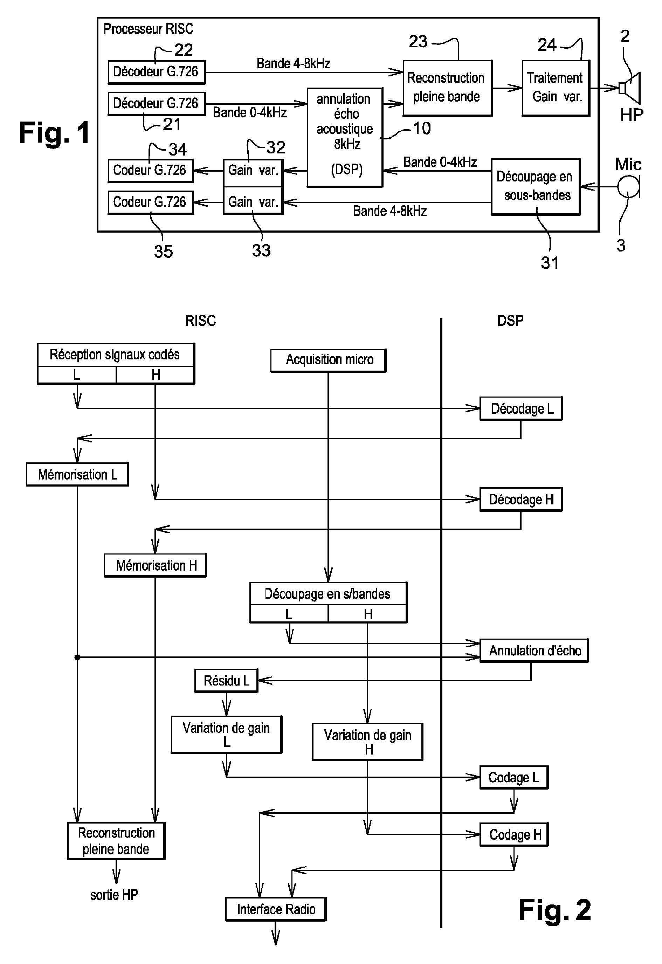

Sur la figure 1 est représenté un système de réduction d'écho d'un signal audio dans une bande dite élargie comprise entre les fréquences 0 et fₘₐₓ, prise ici égale à 8000 Hz. Ce signal est échantillonné à la fréquence 16 kHz.

Le système de la figure 1 est géré par un processeur RISC dont le code est programmé pour fonctionner à la fréquence d'échantillonnage de 16 kHz et comprend un dispositif 10 d'annulation d'écho par filtrage adaptatif intégré dans un processeur DSP dont la fréquence d'échantillonnage fₑ est fixée à 8 kHz, de sorte qu'on peut écrire que la fréquence d'échantillonnage du signal audio est k.fₑ avec ici k=2.

Afin de réaliser un terminal mains-libres de type DECT bénéficiant de la fonction d'annulation d'écho offerte par le dispositif 10, et ceci malgré l'incompatibilité entre les fréquences d'échantillonnage du signal audio et du processeur DSP, il est proposé le procédé qui va maintenant être décrit en détail en référence à la figure 2.

Le processeur RISC filtre le signal audio codé reçu échantillonné à 16 kHz en k=2 sous-bandes de fréquence dont une sous-bande basse L comprise entre 0 et fₘₐₓ/k=fₘₐₓ/2=4000 Hz et une sous-bande haute H comprise entre 4000 Hz et fₘₐₓ=8000 Hz. Une décimation par k=2 de la fréquence d'échantillonnage k.fe=16 kHz est effectuée de sorte que les signaux L et H dans chacune des sous-bandes sont échantillonnés à 8 kHz. Ces signaux sont décodés respectivement à 8 kHz par les décodeurs G.726 21, 22 dans le processeur DSP et mémorisés dans le processeur RISC, en particulier le signal L en sous-bande basse en vue de son utilisation par le dispositif 10 d'annulation d'écho, cette sous-bande basse contenant la partie la plus importante du couplage entre le haut-parleur 2 et le microphone 3.

Le signal audio décodé reçu est ensuite reconstitué pleine bande par le module 23 de reconstruction et appliqué au haut-parleur 2 après traitement par un étage 24 à gain variable.

Le signal audio non codé fourni par le microphone 3, échantillonné à 16 kHz, est, de manière analogue au signal audio reçu, découpé par un module 31 de découpage du processeur RISC en une sous-bande basse L entre 0 et 4000 Hz et une sous-bande haute H entre 4000 et 8000 Hz. Puis, par décimation d'un rapport 2 de la fréquence d'échantillonnage, les signaux audio contenus dans chacune des sous-bandes sont ramenés à une fréquence d'échantillonnage de 8 kHz.

Comme l'indique la figure 1, le signal basse-fréquence 0-4000 Hz est traité par le dispositif 10 d'annulation d'écho par filtrage adaptatif à 8 kHz. Le résidu de ce signal ainsi que le signal haute fréquence 4000-8000 Hz issu du module 31 sont transmis au processeur RISC pour recevoir une variation de gain additionnelle programmée dans les étages 32, 33 à gain variable du processeur RISC, ceci afin de compléter la fonction mains-libres.

Les signaux audio délivrés par les étages 32, 33 sont codés à 8 kHz respectivement par les codeurs G.726 34, 35 du processeur DSP, et envoyés à une interface radio.

La solution décrite permet donc de supprimer la majeure partie de l'écho acoustique, situé pour l'essentiel dans la sous-bande basse 0-4000 Hz, par le biais de la fonction d'annulation d'écho à 8 kHz embarquée dans le processeur DSP, et de compléter le traitement par une variation de gain qui se trouve simplifiée par l'appel au filtre adaptatif du DSP.

La variation de gain n'étant qu'un complément, le mode d'interactivité (« full-duplex »/« half-duplex ») est bien supérieur à ce qu'il serait s'il n'était pas fait appel au filtre adaptatif du DSP.

L'invention a été décrite pour une valeur de 2 du rapport k entre les fréquences d'échantillonnage du signal audio et du mécanisme d'annulation d'écho. Il est cependant bien entendu qu'elle s'applique de la même manière à toutes autres valeurs entières supérieures à 1 du rapport k.

## Revendications

1. Procédé de réduction d'écho par un dispositif (10) d'annulation d'écho fonctionnant à une fréquence d'échantillonnage fₑ d'un signal audio dans une bande de fréquence comprise entre 0 et fₘₐₓ, échantillonné à une fréquence k.fₑ, k étant un entier supérieur à 1, **caractérisé en ce que** ledit procédé comprend les étapes consistant à :
- filtrer ledit signal audio en k sous-bandes de fréquences respectives comprises entre (i-1).fₘₐₓ/k et i.fₘₐₓ/k, i variant entre 1 et k,
- décimer la fréquence d'échantillonnage k.fₑ du signal audio dans un rapport k,
- appliquer le dispositif (10) d'annulation d'écho à un signal filtré dans au moins une desdites sous-bandes.

2. Procédé selon la revendication 1, **caractérisé en ce que** ledit dispositif (10) d'annulation est appliqué au signal filtré dans une sous-bande présentant l'écho le plus important.

3. Procédé selon l'une des revendications 1 ou 2, **caractérisé en ce qu'**un gain variable est appliqué à au moins un signal dans une desdites sous-bandes.

4. Système de réduction d'écho d'un signal audio dans une bande de fréquence comprise entre 0 et fₘₐₓ, échantillonné à une fréquence k.fₑ, k étant un entier supérieur à 1, ledit système comprenant un dispositif (10) d'annulation d'écho fonctionnant à une fréquence d'échantillonnage fₑ, **caractérisé en ce que** ledit système comprend en outre un module (31) de découpage dudit signal audio par filtrage en k sous-bandes de fréquences respectives comprises entre (i-1).fₘₐₓ/k et i.fₘₐₓ/k, i variant entre 1 et k, et décimation de la fréquence d'échantillonnage k.fₑ dans un rapport k, au moins une sortie dudit module (31) de découpage étant reliée au dispositif (10) d'annulation d'écho.

5. Système selon la revendication 4, **caractérisé en ce que** la sortie du module (31) de découpage du signal filtré dans une sous-bande présentant l'écho le plus important est reliée audit dispositif (10) d'annulation d'écho.

6. Système selon l'une des revendications 4 ou 5, **caractérisé en ce qu'**un étage (32, 33) à gain variable est relié à au moins une sortie dudit module (31) de découpage.

7. Programme d'ordinateur comprenant des instructions pour la mise en oeuvre du procédé selon l'une quelconque des revendications 1 à 3 lorsque ledit programme est exécuté par un ordinateur.

8. Terminal de télécommunication, **caractérisé en ce qu'**il comporte un système de réduction d'écho selon l'une quelconque des revendications 4 à 6.
